# EUROPÄISCHE PATENTSCHRIFT

(11) **EP 2 374 668 B1**
(45) Veröffentlichungstag und Bekanntmachung des Hinweises auf die Patenterteilung: **14.11.2012**
(21) Anmeldenummer: 11172662.6
(22) Anmeldetag: 22.05.2008
(51) Int. Cl.: B60R 21/231, B60R 21/235

(54) **Gasstromverteiler für ein Gassackmodul**
Gas flow distributor for a gasbag module
Répartiteur de flux gazeux pour un module de sac contenant du gaz

(30) Priorität: 22.05.2007 DE 202007007355 U
(43) Veröffentlichungstag der Anmeldung: 12.10.2011
(62) Teilanmeldung aus: 08759927.0
(73) Patentinhaber: Takata AG, 63743 Aschaffenburg (DE)
(72) Erfinder: Magnin, Carlo, 89551 Königsbronn (DE); Rist, Holger, 89179 Beimerstetten (DE); Schneider, Nico, 09477 Jöhstadt (DE)
(74) Vertreter: Staroske, Sandro

(56) Entgegenhaltungen:
- EP-A- 1 310 409
- EP-A- 1 462 321
- WO-A-00/20260
- DE-A1-102005 015 078
- DE-U1- 20 321 395
- US-A1- 2001 019 201
- US-A1- 2006 163 849
- US-A1- 2006 255 570

## Beschreibung

Die Erfindung betrifft einen Gasstromverteiler gemäß dem Oberbegriff des Anspruchs 1.

Ein derartiger Gasstromverteiler dient zum Verteilen von Gas beim Aufblasen eines Gassackes. Dabei kann aus einem Gasgenerator austretendes Gas überwiegend nur in eine Richtung abgelenkt werden oder es werden mehrere Gasströme gebildet, die in unterschiedliche Richtungen aus dem Gasstromverteiler austreten können. Der Gasstromverteiler weist eine flexible Hülle auf, die beim Aufblasen des Gassackes vom zu verteilenden Gas durchströmt wird und die durch zumindest zwei über eine dauerhafte Naht miteinander verbundene Hüllenteile aus einem flexiblen Material gebildet ist. Beim Durchströmen von Gas durch die Hülle dehnt sich diese infolge des Gasdruckes aus, so dass Kräfte auf die Hülle einwirken, die durch jene Naht aufgenommen werden.

Eine Einrichtung nach dem Oberbegriff des Anspruchs 1 ist aus US 2001/019201 bekannt.

Der Erfindung liegt die Aufgabe zugrunde einen Gasstromverteiler der eingangs genannten Art zu verbessern.

Dieses Problem wird durch einen Gasstromverteiler mit den Merkmalen des Anspruchs 1 gelöst.

Danach ist zur Aufnahme der auf die Hülle ausgeübten Kräfte eine zusätzliche, lösbare Verbindung der beiden Hüllenteile vorgesehen, wobei die zusätzliche Verbindung zum Begrenzen der durch die Naht aufzunehmenden Kräfte derart mit der Hülle zusammenwirkt, dass jene Verbindung gelöst wird, wenn Gas die Hülle durchströmt. Insbesondere erstreckt sich die zusätzliche, lösbare Verbindung abschnittsweise entlang der Naht.

Die zusätzliche Verbindung der beiden Hüllenteile ist ― von einem durch die Hülle umgebenen Innenraum des Gasstromverteilers her betrachtet ― bevorzugt vor einem Abschnitt der die beiden Hüllenteile miteinander verbindenden Naht angeordnet, so dass im Bereich der zusätzlichen lösbaren Verbindung auf die Hülle infolge des Gasdruckes einwirkende Kräfte zunächst in die lösbare Verbindung eingeleitet werden, die hierdurch gelöst wird. Nach dem Lösen nimmt die eigentliche Verbindung der beiden Hüllenteile der Hülle in Form der dauerhaften Naht die besagten Kräfte auf. Jedoch muss die dauerhafte Naht nicht die anfänglich beim Aufblasen des Gassackes wirkenden Kraftspitzen aufgrund der explosiven Gaserzeugung durch den Gasgenerator aufnehmen. Diese werden durch die lösbare Verbindung absorbiert.

Es ist natürlich möglich, mehr als eine zusätzliche (lösbare) Verbindung vorzusehen. Ebenso können Art und Verlauf der zusätzlichen lösbaren Verbindung an die spezifischen Gegebenheiten angepasst werden.

Zum Aufnehmen eines Gasgenerators weist die Hülle einen ersten Abschnitt auf, in den der Gasgenerator durch eine Einführöffnung des ersten Abschnittes hindurch einführbar ist, so dass die Gasaustrittsöffnungen des Gasgenerators in jenem ersten Abschnitt der Hülle zu liegen kommen. Dabei ist die Einführöffnung vorzugsweise durch eine Unterbrechung der Naht gebildet, die die beiden Hüllenteile zusammenhält, so dass die beiden Hüllenteile je einen Randabschnitt der Einführöffnung bilden.

Der erste Abschnitt ist über einen Übergangsbereich mit einem zweiten Abschnitt der Hülle verbunden, der zur Anordnung in einem mit Gas befüllbaren Innenraum eines Gassackes eingerichtet und vorgesehen ist. Hierbei kann es sich z. B. um einen Seitengassack handeln, der sich zum Schutz einer Person vorhangartig vor einem seitlichen Karosseriebereich eines Kraftfahrzeuges entfalten lässt.

Zum Verteilen von Gas weist der zweite Abschnitt der Hülle vorzugsweise zwei einander gegenüberliegende Ausströmöffnungen auf, durch die hindurch Gas in entgegen gesetzte Richtungen in einen Gassack eingeleitet werden kann.

In einer Variante der Erfindung erstreckt sich der zweite Abschnitt der Hülle entlang einer Erstreckungsrichtung längs, wobei die beiden Ausströmöffnungen bevorzugt entlang der Erstreckungsrichtung einander gegenüber liegen. Bevorzugt sind die Ausströmöffnungen durch Unterbrechungen der Naht gebildet, mittels der die umlaufenden Randbereiche der beiden Hüllenteile miteinander verbunden sind.

In einer weiteren Variante der Erfindung wird die Hülle in ihrer Form durch die lösbare Verbindung derart beeinflusst, dass das die Hülle durchströmende Gas vor einem Lösen jener Verbindung mehrheitlich durch eine der beiden Ausströmöffnungen den Gasstromverteiler verlässt, d.h., der Gasstrom wird aufgrund der lösbaren Verbindung zunächst derart durch den Gasstromverteiler gelenkt, dass der Gasstrom eine Vorzugsrichtung aufweist (pro Zeiteinheit strömt dabei durch die eine Ausströmöffnung mehr Gas als durch die andere).

Damit der Gasgenerator möglichst wenig Bauraum einnimmt, sieht eine Variante der Erfindung vor, dass der erste Abschnitt der Hülle unter einem spitzen Winkel in den zweiten Abschnitt der Hülle einmündet. Dabei ist vorgesehen, dass die zusätzliche, lösbare Verbindung die beiden Hüllenteile in einem Übergangsbereich der Hülle miteinander verbindet, an dem der erste Abschnitt der Hülle in den zweiten Abschnitt der Hülle einmündet, d.h., zumindest ein Teil oder ein Abschnitt jener lösbaren Verbindung der beiden Hüllenteile verläuft ausgehend vom ersten Abschnitt in den zweiten Abschnitt. Hierbei verstärkt die zusätzliche, lösbare Verbindung bevorzugt den Teil der Naht, der (aufgrund des spitzwinkligen Einmündens des ersten Abschnittes in den zweiten Abschnitt) jenen spitzen Winkel einschließt. Oder anders gesagt, die die Hüllenteile miteinander verbindende Naht verläuft entlang einander zugewandter Seiten des ersten und des zweiten Abschnittes, wobei jene Seiten den spitzen Winkel zwischen den beiden Abschnitten der Hülle einschließen. Der entsprechend gekrümmte Abschnitt der Naht ist durch die mindestens eine zusätzliche, lösbare Verbindung verstärkt, die dabei den Übergangsbereich zwischen den beiden Abschnitten, durch den Gas vom ersten Abschnitt in den zweiten Abschnitt der Hülle strömen kann, verengt. Durch das Lösen der zusätzlichen Verbindung beim Aufblasen wird der Übergangsbereich im Querschnitt erweitert.

In einer Variante der Erfindung wird die lösbare Verbindung durch mindestens eine, zumindest abschnittsweise entlang der Naht verlaufende Reißnaht gebildet. Die lösbare Verbindung kann auch durch eine Silikonnaht (Klebung) gebildet sein.

Allgemein weist ein Verbindungsmittel zum Bereiststellen der lösbaren Verbindung zumindest zwei lösbar miteinander verbundene Materialbereiche auf, die beim Einleiten einer die beiden Materialbereiche in entgegen gesetzte Richtungen vorspannenden Kraft voneinander getrennt werden, so dass die Verbindung zwischen den beiden Hüllenteilen gelöst wird.

Die dauerhafte Naht kann ebenfalls durch verschiedene Verbindungsmittel bereitgestellt werden. Bevorzugt handelt es sich bei besagter Naht um eine genähte Naht (Nähnaht), eine Klebenaht, oder eine Schweißnaht.

Die beiden Hüllenteile bestehen je aus zumindest einer Lage eines flexiblen Materials und sind entlang ihrer äußeren Ränder mittels der Naht miteinander verbunden. Bei dem flexiblen Material handelt es sich vorzugsweise um ein brennbares Material, so dass im Brandfall die Schubneutralität der Einheit Gasgenerator/Gasstromverteiler gewährleistet werden kann. Dabei kann es sich bei dem Material um eine Gewebe, ein Gewirk oder ein sonstiges flexibles Flächengebilde handeln.

Vorzugsweise sind die beiden Hüllenteile abschnittsweise einstückig miteinander verbunden, so dass die beiden Hüllenteile zur Ausbildung der Hülle entlang einer Klappachse aufeinander geklappt werden können. Dabei sind die beiden durch die Klappachse definierten Hüllenteile bevorzugt spiegelsymmetrisch bezüglich der Klappachse ausgebildet. D.h., es ist denkbar, dass sich der Gasstromverteiler aus einem einzigen, zusammenhängenden Hüllenteil zusammensetzt, mit zwei einstückig miteinander verbundenen Hälften, die zur Ausbildung der Hülle des Gasstromverteilers aufeinander geklappt sind.

Gemäß der Erfindung weist jedes Hüllenteil zwei Lagen eines flexiblen Materials auf, wobei die beiden Lagen bevorzugt deckungsgleich ausgebildet sind.

Gemäß der Erfindung setzt sich jedes Hüllenteil aus zumindest vier übereinander liegenden Lagen zusammen, so dass die Hüllenteile zumindest im Bereich der Gasaustrittsöffnungen eines Gasgenerators vierlagig ausgebildet sind. Hierbei können zumindest einige der übereinander liegenden Lagen zum Innenraum des Gasstromverteilers hin flächenmäßig kleiner werden, so dass einerseits Material eingespart und andererseits das Gewicht des Gasstromverteilers optimiert wird.

In einer weiteren Variante der Erfindung setzt sich das Hüllenteil bevorzugt aus fünf übereinander liegenden Lagen zusammen. Hierbei sind bevorzugt zumindest zwei Lagen deckungsgleich ausgebildet, und zwar insbesondere die beiden flächenmäßig kleinsten Lagen, die vorzugsweise im Bereich der Gasaustrittsöffnungen des Gasgenerators angeordnet sind.

Damit die Lagen bei der Herstellung des Gasstromverteilers reproduzierbar positionierbar sind, weisen die Lagen bevorzugt jeweils eine Durchgangsöffnung auf, wobei die Durchgangsöffnungen miteinander fluchten, wenn die besagten Lagen ihre bestimmungsgemäße Position zueinander einnehmen. Die Durchgangsöffnungen können zum Positionieren und Ausrichten der Lagen bei der Herstellung des Gasstromverteilers durch ein geeignetes Werkzeug durchgriffen werden.

Damit durch jene Durchgangsöffnungen des Gasstromverteilers kein Gas in den Gassack entweichen kann, weisen die Durchgangsöffnungen einen entsprechend kleinen Durchmesser auf und sind bevorzugt so an der Hülle angeordnet, dass sie in einem bestimmungsgemäß in einen Gassack angeordneten Zustand des Gasstromverteilers durch eine Gassacklage des Gassackes verdeckt sind. Somit kann beim Aufblasen des Gassackes kein Gas durch jene Durchgangsöffnungen aus dem Gasstromverteiler in den Gassack entweichen.

Des Weiteren ist vorzugsweise in einer Variante der Erfindung am zweiten Abschnitt zumindest eine zusätzliche Ausströmöffnung vorgesehen, aus der Gas quer zur Erstreckungsrichtung des zweiten Abschnittes aus dem zweiten Abschnitt in den Innenraum des Gassackes entweichen kann.

Ein Gedanke der Erfindung besteht weiterhin darin, ein Gassackmodul, insbesondere einen Seitengassackmodul, mit einem erfindungsgemäßen Gasstromverteiler bereitzustellen.

Die vorliegende Erfindung wird im Folgenden anhand von in Figuren dargestellten Ausführungsbeispielen näher beschrieben. Es zeigen:
- Fig. 1: eine Draufsicht auf einen Seitengassack mit einem erfindungsgemäßen Gasstromverteiler;
- Fig. 2: ein Detail der Figur 1;
- Fig. 3-6: den Aufbau eines erfindungsgemäßen Gasstromverteilers der Figuren 1 und 2;
- Fig. 7: eine Draufsicht auf einen weiteren Seitengassack mit einem Gasstromverteiler, der eine Abwandlung des in den Figuren 1 bis 6 gezeigten Gasstromverteilers darstellt; und
- Fig. 8 ― 10: den Aufbau des in der Figur 7 gezeigten Gasstromverteilers.

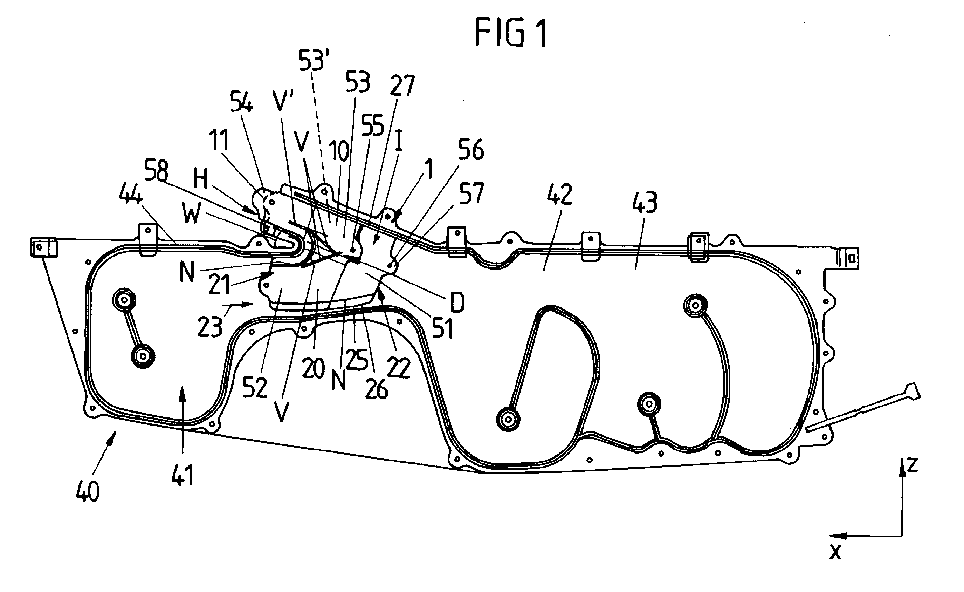

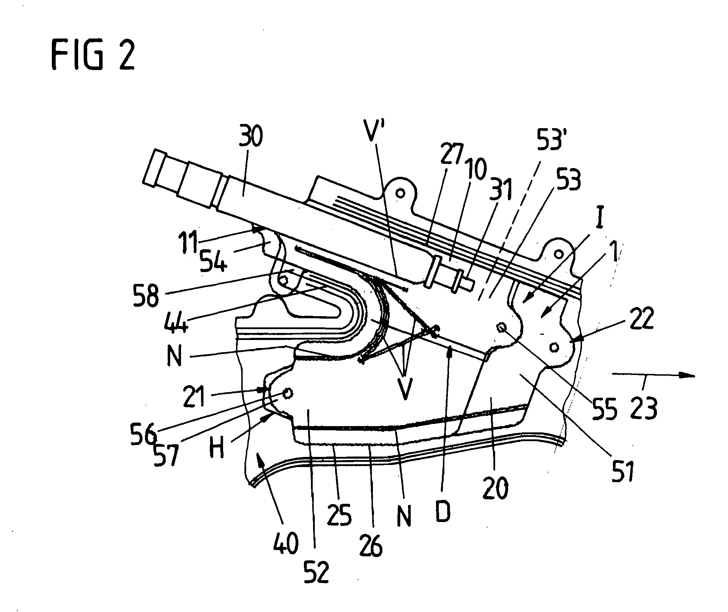

Figur 1 zeigt im Zusammenhang mit den Figuren 2 bis 6 eine Draufsicht auf einen Gassack in Form eines Seitengassackes 40 in einem flach ausgebreiteten Zustand, der zum Schutz einer Person vor einem Seitencrash vorhangartig vor einer seitlichen Karosserie eines Kraftfahrzeuges, und zwar insbesondere vor den seitlichen Fenstern des Kraftfahrzeuges, mittels eines Gasgenerators in Form eines längs erstreckten Rohrgasgenerators 30 aufblasbar ist. Der Gasgenerator 30 strahlt dabei Gas durch umfänglich am Gasgenerator 30 vorgesehene Gasaustrittsöffnungen 31 radial ab und verhält sich somit beim Ausströmen des Gases schubneutral. Der Gassack 40 setzt sich aus zumindest zwei Gassackteilen zusammen, deren umlaufende Ränder mittels einer Umfangsnaht 44 des Gassackes 40 zur Ausbildung einer mit Gas befüllbaren Hülle des Gassackes 40 miteinander verbunden sind. Vorzugsweise ist die Umfangsnaht 44 silikonisiert (oder auf andere geeignete Weise abgedichtet), so dass der Gassack 40 gasdicht ausgebildet ist.

Zum Verteilen eines durch den Gasgenerator 30 freigesetzten Gasstromes ist ein Gasstromverteiler 1 vorgesehen. Damit sich das zusammengesetzte System Gasgenerator 30 / Gasstromverteiler 1 im Brandfall ebenfalls schubneutral verhält, weist der Gasstromverteiler 1 eine flexible Hülle H aus einem brennbaren Gewebe auf. Im Brandfall verbrennt der Gasstromverteiler 1 und das radiale Abstrahlen von Gasen durch den Gasgenerator 30 stellt die Schubneutralität sicher.

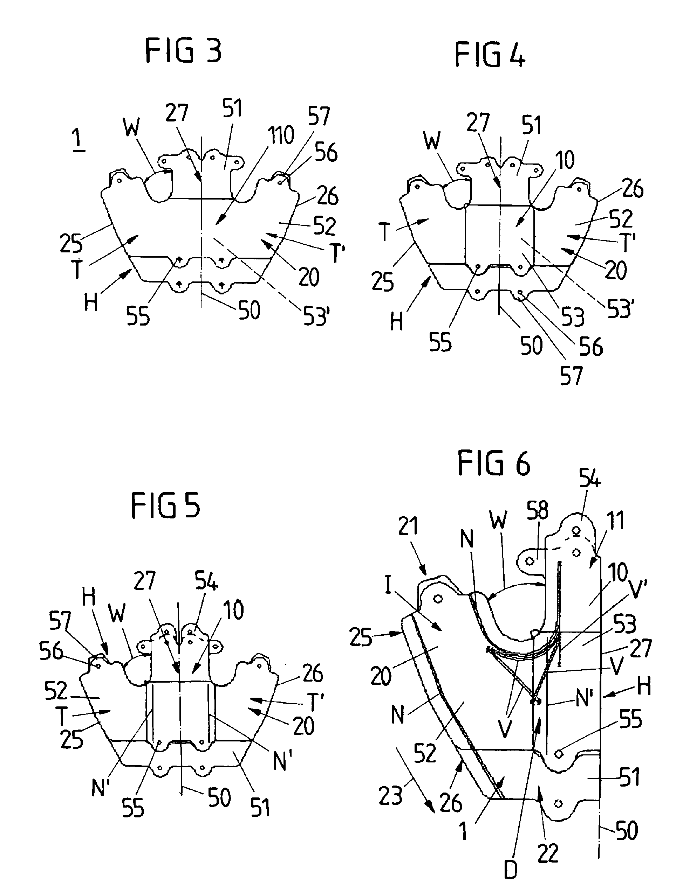

Die den Gasstrom leitende bzw. verteilende Hülle H des Gasstromverteilers 1 umgibt einen Innenraum I des Gasstromverteilers 1, durch den hindurch der Gasstrom zum Innenraum 41 des Gassackes 40 strömt und setzt sich gemäß den Figuren 3 bis 6 aus zumindest vier oder fünf übereinander liegenden Lagen 51, 52, 53, 53', 54 zusammen.. Dabei sind jene vier oder fünf Lagen 51, 52, 53, 53', 54 derart angeordnet, dass derjenige Teil der Hülle H, in dem die Gasaustrittsöffnungen 31 liegen, entsprechend vierlagig oder fünflagig aufgebaut ist. Hierdurch wird der Gassack 40 sicher vor den ggf. hei-βen Gasen des Gasgenerators 30 geschützt.

Damit die vier oder fünf Lagen 51, 52, 53, 53', 54 bei der Herstellung des Gasstromverteilers 1 präzise untereinander ausgerichtet werden können, weisen die Lagen 51, 52, 53, 53', 54 jeweils eine Durchgangsöffnung 55 auf, die in einem bestimmungsgemäß positionierten Zustand der Lagen 51, 52, 53, 53', 54 deckungsgleich übereinander liegen, und zwar vorzugsweise in einem mittigen Bereich der Hülle H Ggf. können die Durchgangsöffnungen 55 zum Zwecke der Positionierung von einem Positionierwerkzeug durchgriffen werden. Die Durchgangsöffnungen 55 dienen lediglich der Positionierung der Lagen 51, 52, 53, 53', 54 untereinander und sind dazu eingerichtet und vorgesehen, bei einem in einen Gassack 40 eingebauten Gasstromverteiler 1 durch eine an das entsprechende Hüllenteil T, T' anliegende Gassacklage 42 verdeckt zu werden, so dass beim Aufblasen des Gassackes 40 keine Gase durch die Durchgangsöffnungen 55 in den Innenraum 41 des Gassackes 40 entweichen können.

Die Hülle H entsteht aus den übereinander liegenden, flach ausgebreiteten Lagen 51, 52, 53, 53', 54, indem diese entlang einer Klappachse 50 gemäß Figuren 3 bis 6, die zwei bezüglich der Klappachse 50 spiegelsymmetrische Hüllenteile T, T' definiert, aufeinander geklappt werden. Die Hülle H weist somit einen Randbereich 27 auf, über den die beiden Hüllenteile T, T' einstückig miteinander verbunden sind. Die angrenzenden Ränder 25, 26 der beiden Hüllenteile T, T' werden mittels einer ggf. silikonisierten Naht N miteinander verbunden. Die so ausgebildete Hülle H weist einen ersten schlauchförmigen Abschnitt 10 auf, der an einem Übergangsbereich D der Hülle H unter einem spitzen Winkel W in einen zweiten schlauchförmigen Abschnitt 20 der Hülle H einmündet, so dass die Hülle H insbesondere eine V-Form ausbilden kann. Die vorstehend beschriebenen Durchgangsöffnungen 55 liegen vorzugsweise im Übergangsbereich D der Hülle H.

Der erste Abschnitt 10 dient als Aufnahme für einen Endabschnitt des Gasgenerators 30, der durch eine Einführöffnung 11 des ersten Abschnittes 10 in jenen Abschnitt 10 eingeführt ist, so dass dessen Gasaustrittsöffnungen 31 im Bereich der innersten Lage 54 der Hülle H zu liegen kommen, wobei der erste Abschnitt 10 dazu ausgebildet ist, in einem schlauchförmig vom Gassack 40 abstehenden Bereich des Gassackes 40 angeordnet zu werden, der zur Aufnahme jenes ersten Abschnittes 10 eingerichtet und vorgesehen ist.

Der zweite Abschnitt 20 verläuft im Innenraum 41 des Gassackes 40 entlang eines ― bezogen auf einen in ein Kraftfahrzeug eingebauten Zustand des Gassackes ― oberen Randes 43 des Gassackes 40 und erstreckt sich dabei entlang einer Erstreckungsrichtung 23 längs, die, bezogen auf den Einbauzustand des Gassackes 40, entlang der Fahrzeuglängsachse x verläuft.

Zum Verteilen des Gasstromes in zwei einander entgegen gesetzte Richtungen (entlang der Erstreckungsrichtung 23) weist der zweite Abschnitt 20 der Hülle H zwei einander entlang der Erstreckungsrichtung 23 gegenüberliegende Ausströmöffnungen 21, 22 auf, durch die aus dem Gasgenerator 30 austretendes Gas in den Innenraum 41 des Gassackes 40 gelangt. Die beiden Ausströmöffnungen 21, 22 können dabei unterschiedlichen Bereichen des Gassackes 40, z.B. unterschiedlichen Kammern, zugeordnet sein. Bei einem Seitengassack 40 kann der erste bzw. zweite Abschnitt 10, 20 der Hülle H entlang der Fahrzeuglängsachse x mittig am Gassack 40 angeordnet sein, so dass die beiden Ausströmöffnungen 21, 22 Gas in einen vorderen und einen hinteren Bereich (bezogen auf die Fahrzeuglängsachse x) des Gassackes 40 abstrahlen können. Vorzugsweise liegt eine erste Ausströmöffnung 22 der beiden Ausströmöffnungen 21, 22 entlang des ersten Abschnittes 10, d.h., entlang der Klappachse 50, der Einführöffnung 11 des ersten Abschnittes 10 gegenüber, während die zweite Abströmöffnung 21 entlang der Erstreckungsrichtung 23 des zweiten Abschnittes 20 der ersten Abströmöffnung 22 gegenüber liegt. Die Einführöffnung 11 sowie die Ausströmöffnungen 21, 22 werden vorzugsweise durch Unterbrechungen der Naht N ausgebildet, über die die beiden Hüllenteile T, T' umfänglich (zumindest abschnittsweise) miteinander verbunden sind.

Zur Ausbildung der Hülle H werden die vier oder ggf. fünf Lagen 51, 52, 53, 53', 54 in einer Ebene flach ausgebreitet und übereinander liegend angeordnet. Hierbei wird jede der Lagen 51, 52, 53, 53', 54 so ausgebreitet, dass jeweils zwei zur Klappachse 50 spiegelsymmetrische Hälften der jeweiligen Lage definiert werden, wobei jeweils eine Hälfte dem ersten Hüllenteil T und die andere Hälfte dem zweiten Hüllenteil T' zugeordnet ist. Somit bildet jede der Lagen 51, 52, 53, 53', 54 je einen Teil der beiden einander gegenüberliegenden Hüllenteile T, T' der Hülle H des Gasstromverteilers 1.

Eine erste Lage 51, die im aufeinander geklappten Zustand der Hüllenteile T, T' eine äußerste Lage 51 der Hülle H bildet, weist unter den Lagen 51, 52, 53, 53', 54 die größte Fläche auf. Zur Herstellung der Hülle H wird jene erste Lage 51 flach ausgebreitet und eine zweite Lage 52 auf der ersten Lage 51 angeordnet, so dass die erste Lage 51 bei der fertigen Hülle H vom Innenraum 1 her betrachtet vor der ersten Lage 51 angeordnet ist.

Die erste Lage 51 überragt die zweite Lage 52 dabei beidseitig entlang der Klappachse 50, wohingegen quer zur Klappachse 50 einander gegenüberliegende Abschnitte der umlaufenden Ränder der ersten und der zweiten Lage 51, 52 aufeinander liegen. Hierbei sind die beiden Lagen 51, 52 insbesondere im Bereich des zweiten Abschnittes 20, der an die zweite Ausströmöffnung 21 angrenzt, im Wesentlichen (d.h., bis auf der Positionierung der Lagen dienende Bereiche 57 der Lagen 51, 52) deckungsgleich ausgebildet.

Auf der zweiten Lage 52 wird hiernach eine (flächenmäßig kleinste) dritte Lage 53 angeordnet, so dass jene Lage 53 in etwa mittig bzgl. der ersten Lage 51 und der zweiten Lage 52 zu liegen kommt. Die dritte Lage 53 ist vorzugsweise (flächig) rechteckförmig ausgebildet, so dass zumindest die Gasaustrittsöffnungen 31 des Gasgenerators 30 im zusammengeklappten Zustand der beiden Hüllenteile T, T' von der dritten Lage 53 umgeben sind. Vom Innenraum 1 des Gasstromverteilers 1 her betrachtet liegt die dritte Lage 53 vor der ersten und der zweiten Lage 51, 52.

In einer Variante der Hülle H ist eine weitere dritte Lage 53' vorgesehen, die als Zwischenlage zwischen der ersten und der zweiten Lage 51, 52 angeordnet wird, und zwar deckungsgleich bezüglich der dritten Lage 53. Im Fall zweier dritter Lagen 53, 53' weist die Hülle H also insgesamt fünf Lagen 51, 52, 53, 53', 54 auf.

Schließlich ist eine innerste vierte Lage 54 vorgesehen, die zwei entlang der Klappachse 50 einander gegenüberliegende, miteinander verbundene Abschnitte aufweist, wobei einer der beiden Abschnitte vorzugsweise deckungsgleich mit der dritten Lage 53 und der andere der beiden Abschnitte im Wesentlichen deckungsgleich mit einem Abschnitt der ersten Lage 51 angeordnet ist, der die Einführöffnung 11 des ersten Abschnittes 10 der Hülle H umfasst, wobei jene vierte Lage 54 entlang der Klappachse 55 (geringfügig) über jenen die Einführöffnung 11 umfassenden Abschnitt der ersten Lage 51 hinaus steht.

An den einzelnen Lagen 51, 52, 53, 53', 54 können umfänglich eine oder mehrere Öffnungen 56 vorgesehen sein, und zwar vorzugsweise jeweils an Bereichen 57 der einzelnen Lagen 51, 52, 53, 53', 54, die von jenen Lagen 51, 52, 53, 53', 54 in der jeweiligen Erstreckungsebene der einzelnen Lage abstehen. Diese Öffnungen 56 dienen zu Montagezwecken, und zwar vorzugsweise zum Positionieren der einzelnen Lagen 51, 52, 53, 53', 54 bei der Herstellung des Gasstromverteilers 1 bzw. des Gassackes 40, in dem der Gasstromverteiler 1 zum Einsatz kommt. Zum Positionieren der Lagen 51, 52, 53, 53', 54 können jene Öffnungen von geeigneten Werkzeugen (z.B. Stiften) durchgriffen werden oder an Positionsmarken, die durch die Öffnungen 56 hindurch sichtbar sind, ausgerichtet werden. In den Figuren ist jeweils exemplarisch nur eine solche Öffnung 56 nebst zugehörigen Bereich 57 des Gasstromverteilers 1 gekennzeichnet.

Nachdem die Lagen 51, 52, 53, 53', 54 wie vorstehend beschrieben angeordnet worden sind, werden jene Lagen mittels zweier Nähte N' miteinander verbunden, die sich jeweils entlang eines parallel zur Klappachse 50 verlaufenden Randes der flächenmäßig kleinsten Lage 53, 53' erstrecken. Anschließend werden die so zusammengesetzten Hüllenteile T, T' der Hülle H des Gasstromverteilers 1 aufeinander geklappt (siehe oben).

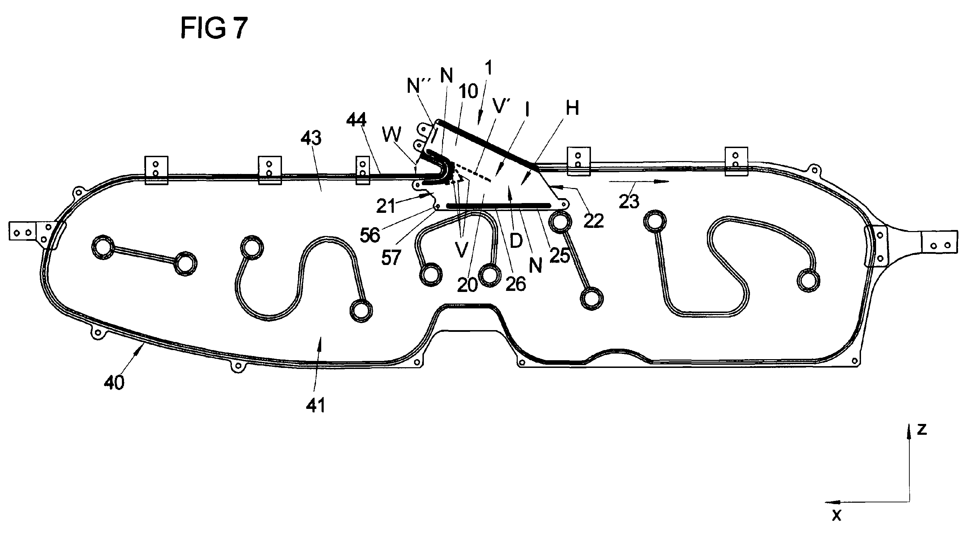

Zum Befestigen des Gasstromverteilers 1 im Gassack 40 kann der Gasstromverteiler 1 (bei einem dichten Gassack 40) außerhalb eines Dichtigkeitsbereiches des Gassackes 40 mit einem Teil des Gassackes 40 vernäht werden oder mittels eines anderen geeigneten Befestigungsmittels am Gassack 40 festgelegt werden. So ist der in den Figuren 1 bis 6 dargestellte Gasstromverteiler 1 über eine Lasche 58, die im Bereich der Einführöffnung 11 vom Gasstromverteiler 1 zur Umfangsnaht 44 des Gassackes 40 hin absteht, mit jener Umfangsnaht 44 vernäht. Alternativ dazu ist der in den Figuren 7 bis 10 dargestellte Gasstromverteiler 1 mittels einer zusätzlichen Naht N" mit dem Gassack 40 vernäht. Die Naht N" verbindet dabei zumindest ein Hüllenteil T des Gasstromverteilers 1 im Bereich der Einführöffnung 11 des ersten Abschnittes 10 mit einem Gassackteil des Gassackes 40. Das weitere Hüllenteil T' kann spiegelbildlich mit dem anderen (gegenüber liegenden) Gassackteil des Gassackes 40 verbunden werden. Vorzugsweise verläuft die zusätzliche Naht N" zumindest abschnittsweise entlang eines Randes des ersten Abschnittes 10 des Gasstromverteilers 1, der die Einführöffnung 11 begrenzt. Auf diese Weise wird sichergestellt, dass der Gasgenerator 30 beim Einführen in den Gasstromverteiler 1 durch die Einführöffnung 11 hindurch nicht versehentlich an der Einführöffnung 11 vorbei in den Gassack 40 eingeführt werden kann.

Denkbar ist auch, den Gasstromverteiler 1 zusammen mit dem Gassack 40 am Gasgenerator 30 festzuklemmen (z.B. mit einer den Gasgenerator umschließenden Schelle).

Bei einem nicht dichten Gassack 40 kann der Gasstromverteiler 1 einfach an einer geeigneten Stelle mit dem Gassack 40 vernäht werden. Auf eine Gasdichtigkeit der Verbindung zwischen dem Gasstromverteiler 1 und dem Gassack 40 kommt es dabei nicht an.

Da die Hülle H vorzugsweise aus einem flexiblen Gewebe besteht, dehnt sie sich beim Aufblasen des Gassackes 40, d.h., wenn Gas die Hülle H durchströmt, aus (infolge des Gasdruckes). Die hierbei auf die Hülle H einwirkenden Kräfte muss die Naht N aufnehmen, die die beiden Hüllenteile T, T' zusammenhält. Hierbei ist die Naht N insbesondere im Mündungsbereich (Übergangsbereich D) der beiden Abschnitte 10, 20 großen Belastungen ausgesetzt und zwar insbesondere in der Anfangsphase des Aufblasens des Gassackes 40, wenn durch den Gasgenerator 30 explosiv Gas frei gesetzt bzw. erzeugt wird.

Die Naht N ist daher im Übergangsbereich D der beiden Abschnitte 10, 20 und zwar auf derjenigen Seite der beiden Abschnitte 10, 20, die den spitzen Winkel W begrenzen (einschließen) durch zusätzliche, lösbare Verbindungen V in Form von Reißnähten verstärkt. Eine erste Reißnaht V folgt dabei abschnittsweise der Bahn der Naht N im Übergangsbereich D, wobei zwei zusätzliche Reißnähte V, die einander schneiden können, jene erste Reißnaht V schneiden können und zusammen mit der ersten Reißnaht V ein dreieckförmiges Gebiet begrenzen, so dass der Übergangsbereich D der Hülle H zwischen dem ersten und dem zweiten Abschnitt 10, 20 durch jene Reißnähte V verengt ist. Die Reißnähte V können jeweils doppelt ausgeführt sein, d.h., aus zwei parallel zueinander verlaufenden Nähten aufgebaut sein.

Zusätzlich ist eine weitere lösbare Verbindung der beiden Hüllenteile T, T' in Form einer weiteren Reißnaht V' vorgesehen, die in der Erstreckungsrichtung des ersten Abschnittes 10 verläuft und somit einerseits den Gasgenerator 30 (in der Figur 7 nicht dargestellt) zusätzlich einfasst und andererseits einen durch den Gasgenerator 30 frei gesetzten Gasstrom zunächst in Richtung der einen Ausströmöffnung 22 leitet, die mit dem ersten Abschnitt 10 fluchtet. Hierdurch erhält der Gasstrom anfangs ― d.h., vor dem Einreißen jener weiterem Reißnaht V' durch den durch die Hülle H strömenden Gasstrom ― eine Vorzugsrichtung in Richtung auf die eine Ausströmöffnung 22, die einem vorderen oder einem hinteren Bereich des Gassackes 40 (bezogen auf die Fahrzeuglängsachse x bei einem bestimmungsgemäß in ein Kraftfahrzeug eingebauten Zustand des Gassackes 40) zugeordnet sein kann.

Des Weiteren schützt die weitere Reißnaht V' einen Abschnitt der Naht N, der die beiden Hüllenteile T, T' im Bereich des ersten Abschnitts 10 miteinander verbindet. Hierzu kann die weitere Reißnaht V' abschnittsweise entlang jenes Abschnittes der Naht N verlaufen.

Beim (explosiven) Aufblasen des Gassackes 40 strömt Gas mit hohem Druck vom ersten Abschnitt 10 über den Übergangsbereich D in den zweiten Abschnitt 20 der Hülle H des Gasstromverteilers 1 ein, wobei sich die Hülle H (explosiv) ausdehnt, so dass in die Reißnähte V eine Kraft eingeleitet wird, die die Reißnähte V einreißen lässt. Hierdurch absorbieren die Reißnähte V Kraftspitzen beim Aufblasen des Gassackes 40 und schützen somit dahinter liegende Abschnitte der dauerhaften Naht N, die die beiden Hüllenteile T, T' zusammenhält.

Die Figuren 7 bis 10 zeigen eine Abwandlung des in den Figuren 1 bis 6 gezeigten Gasstromverteilers 1, wobei im Unterschied zu den Figuren 1 bis 6 der Gasstromverteiler 1 nicht aus vier bzw. fünf Lagen 51, 52, 53, 53', 54 zusammengesetzt ist, sondern aus zwei deckungsgleich ausgebildeten, übereinander liegenden Lagen 51, 52, die wiederum zur Ausbildung der Hülle H entlang einer Klappachse 50 aufeinander geklappt werden.

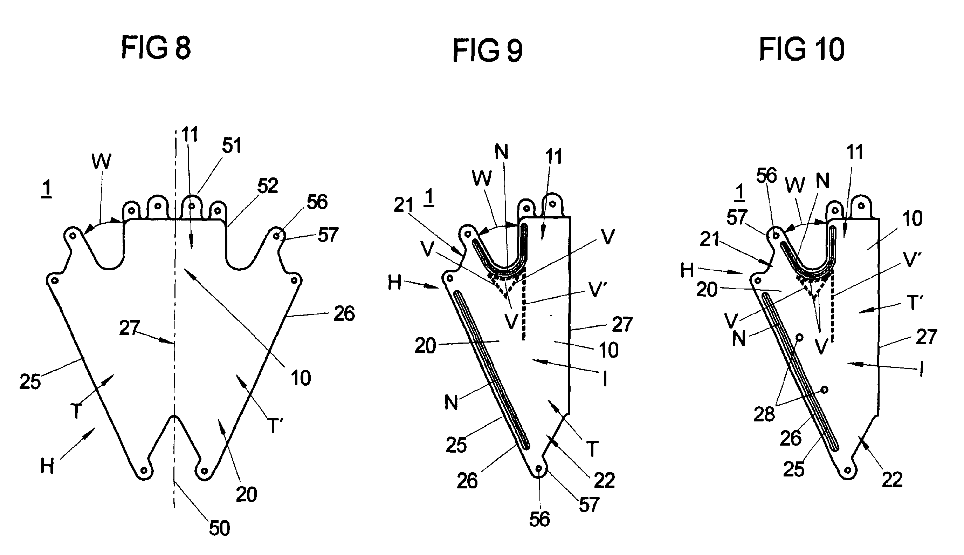

Schließlich weist der zweite Abschnitt 20 des Gasstromverteilers 1 gemäß Figur 10 zwei weitere Ausstromöffnungen 28 auf, die entlang der Naht N angeordnet sind, so dass durch diese Ausströmöffnungen 28 ― bezogen auf einen Einbauzustand des Gassackes 40 ― Gas entlang der vertikalen Fahrzeugachse in den Innenraum 41 des Gassackes 40 strömen kann, also senkrecht zu den durch die Ausströmöffnungen 21, 22 austretenden Gasströmen.

## Patentansprüche

1. Gasstromverteiler (1) für ein Gassackmodul zum gezielten Verteilen von aus einem Gasgenerator (30) frei gesetzten Gas in einen Gassack (40) beim Aufblasen des Gassackes (40) mit einer flexiblen Hülle (H) des Gasstromverteilers (1), die beim Aufblasen des Gassackes (40) vom frei gesetzten Gas durchströmt wird und die mindestens zwei mittels einer Naht (N) miteinander verbundene Hüllenteile (T, T') aus einem flexiblen Material aufweist, wobei die Naht (N) Kräfte aufnimmt, welche das die Hülle (H) durchströmende Gas auf die Hülle (H) ausübt, wobei zur Aufnahme der durch das Gas auf die Hülle (H) ausgeübten Kräfte zumindest abschnittsweise eine zusätzliche, lösbare Verbindung (V) der beiden Hüllenteile (T, T') vorgesehen ist, und wobei die zusätzliche Verbindung (V) zum Begrenzen der durch die Naht (N) aufzunehmenden Kräfte derart mit der Hülle (H) zusammenwirkt, dass jene Verbindung (V) gelöst wird, wenn Gas die Hülle (H) durchströmt,
**dadurch gekennzeichnet,**
**dass** jedes Hüllenteil (T, T') zwei Lagen (51, 52) eines flexiblen Materials aufweist, wobei die Lagen (51, 52) zum Positionieren der Lagen (51, 52) bei der Herstellung des Gasstromverteilers (1) jeweils eine Durchgangsöffnung (55) aufweisen, die deckungsgleich übereinanderliegen, wenn die Lagen (51, 52) ihre bestimmungsgemäße Position zueinander einnehmen.

2. Gasstromverteiler nach Anspruch 1, **dadurch gekennzeichnet, dass** die zusätzliche Verbindung (V) zumindest abschnittsweise entlang der Naht (N) verläuft.

3. Gasstromverteiler nach Anspruch 1 oder 2, **dadurch gekennzeichnet, dass** die Hülle (H) einen Innenraum (I) des Gasstromverteilers (1) umgibt.

4. Gasstromverteiler nach Anspruch 3, **dadurch gekennzeichnet, dass** die zusätzliche Verbindung (V) der beiden Hüllenteile (T, T') vom Innenraum (I) des Gasstromverteilers her betrachtet vor der Naht (N) angeordnet ist.

5. Gasstromverteiler nach einem der vorhergehenden Ansprüche, **dadurch gekennzeichnet, dass** die Hülle (H) einen ersten Abschnitt (10) und einen damit gasleitend verbundenen zweiten Abschnitt (20) aufweist.

6. Gasstromverteiler nach Anspruch 5, **dadurch gekennzeichnet, dass** der erste Abschnitt (10) dazu ausgebildet ist, den Gasgenerator (30) aufzunehmen, so dass Gasaustrittsöffnungen (31) des Gasgenerators (30) in einem vom ersten Abschnitt (10) umgebenden Teil des Innenraumes (I) des Gasstromverteilers (1) angeordnet sind.

7. Gasstromverteiler nach Anspruch 5 oder 6, **dadurch gekennzeichnet, dass** der zweite Abschnitt (20) zur Anordnung in einem mit Gas befüllbaren Innenraum (41) eines Gassackes (40) eingerichtet und vorgesehen ist, wobei insbesondere der zweite Abschnitt (20) zwei einander gegenüberliegende Ausströmöffnungen (21, 22) aufweist, durch die hindurch Gas in einen Gassack (40) gelangen kann, und wobei insbesondere der zweite Abschnitt (20) entlang einer Erstreckungsrichtung (23) längs erstreckt ausgebildet ist.

8. Gasstromverteiler nach einem der vorhergehenden Ansprüche, **dadurch gekennzeichnet, dass** die lösbare Verbindung (V) durch eine Reißnaht gebildet ist.

9. Gasstromverteiler nach einem der vorhergehenden Ansprüche, **dadurch gekennzeichnet, dass** die Naht (N) als eine der folgenden Nähte ausgebildet ist:
- eine Nähnaht,
- eine Klebenaht, oder
- eine Schweißnaht.

10. Gasstromverteiler nach einem der vorhergehenden Ansprüche, **dadurch gekennzeichnet, dass** die beiden Hüllenteile (T, T') je aus zumindest einer Lage (51, 52, 53, 53', 54) eines flexiblen Materials gebildet sind, die entlang ihrer äußeren Ränder (25, 26) mittels der Naht (N) miteinander verbunden sind.

11. Gasstromverteiler nach einem der vorhergehenden Ansprüche, **dadurch gekennzeichnet, dass** die beiden Hüllenteile (T, T') abschnittsweise einstückig miteinander verbunden sind.

12. Gasstromverteiler nach einem der vorhergehenden Ansprüche, **dadurch gekennzeichnet, dass** die beiden Hüllenteile (T, T') zur Ausbildung der Hülle (H) entlang einer Klappachse (50) deckungsgleich aufeinander geklappt sind.

13. Gasstromverteiler nach einem der vorhergehenden Ansprüche, **dadurch gekennzeichnet, dass** die beiden Lagen (51, 52) deckungsgleich ausgebildet sind.

14. Gasstromverteiler nach einem der vorhergehenden Ansprüche, **dadurch gekennzeichnet, dass** die Durchgangsöffnungen (55) so an der Hülle (H) angeordnet sind, dass sie in einem bestimmungsgemäß in einen Gassack (40) angeordneten Zustand des Gasstromverteilers (1) durch eine Gassacklage (42) des Gassackes (40) verdeckt werden, so dass kein Gas beim Aufblasen des Gassackes (40) durch jene Durchgangsöffnungen (55) aus dem Gasstromverteiler (1) entweichen kann.

15. Gasstromverteiler nach Anspruch 7 oder einem der Ansprüche 8 bis 14 soweit rückbezogen auf Anspruch 7, **dadurch gekennzeichnet, dass** am zweiten Abschnitt (20) zumindest eine zusätzliche Ausströmöffnung (28) ausgebildet ist, durch die Gas quer zur Erstreckungsrichtung (23) des zweiten Abschnittes (20) aus dem zweiten Abschnitt (20) ausströmen kann.

## Claims

1. Gas flow distributor (1) for an airbag module for the specific distribution of gas released from a gas generator (3c) into an airbag (40) upon inflation of the airbag (40), said gas flow distributor (1) comprising a flexible sleeve (H) through which the released gas flows upon inflation of the airbag (40) and which comprises at least two sleeve parts (T, T') out of a flexible material connected to each other by means of a seam (N), wherein the seam (N) takes up forces which are exerted on the sleeve by the gas flowing through the sleeve, wherein an additional releasable connection (V) of the two sleeve parts (T, T') is provided at least in sections for taking up the forces exerted by the gas on the sleeve (H), and wherein the additional connection (V) cooperates with the sleeve (H) for limiting the forces to be taken up by the seam (N) in a way, that said connection (V) is released when gas flows through the sleeve (H),
**characterized in that**
each sleeve part (T, T') comprises two layers (51, 52) of a flexible material, wherein the layers (51, 52) comprise a through-opening (55), respectively, for positioning the layers (51, 52) during production of the gas flow distributor (1), which through-openings lie congruently on top of each other when the layers (51, 52) take their intended positions with respect to each other.

2. Gas flow distributor according to claim 1, **characterized in that** the additional connection (V) extends at least in sections along the seam (N).

3. Gas flow distributor according to claim 1 or 2, **characterized in that** the sleeve (H) surrounds an internal space (I) of the gas flow distributor (1).

4. Gas flow distributor according to claim 3, **characterized in that** the additional connection (V) of the two sleeve parts (T, T') when viewed from the internal space (I) of the gas flow distributor (1) is arranged in front of the seam (N).

5. Gas flow distributor according to one of the preceding claims, **characterized in that** the sleeve (H) comprises a first section (10) and a second section (20) connected thereto in a gas conducting manner.

6. Gas flow distributor according to claim 5, **characterized in that** the first section (10) is designed to receive the gas generator (30) so that gas outlet ports (31) of the gas generator (30) are arranged in a part of the internal space (I) of the gas flow distributor (1), which part is surrounded by the first section (10).

7. Gas flow distributor according to claim 5 or 6, **characterized in that** the second section (20) is adapted and provided for being arranged in an internal space (41) of an airbag (40) that can be filled with gas, wherein particularly the second section (20) comprises two opposing exhaust ports (21, 22) through which gas can get into an airbag (40), and wherein particularly the second section (20) is formed longitudinally extending along an extension direction (23).

8. Gas flow distributor according to one of the preceding claims, **characterized in that** the releasable connection (V) is formed by a tear seam.

9. Gas flow distributor according to one of the preceding claims, **characterized in that** the seam (N) is formed as one of the following seams:
- a sewn seam,
- a glue line, or
- a welded seam.

10. Gas flow distributor according to one of the preceding claims, **characterized in that** the two sleeve parts (T, T') are formed out of at least one layer (51, 52, 53, 53', 54) of a flexible material, which layers are connected to each other along their outer boundaries (25, 26) by means of a seam (N).

11. Gas flow distributor according to one of the preceding claims, **characterized in that** the two sleeve parts (T, T') are integrally connected to each other in sections.

12. Gas flow distributor according to one of the preceding claims, **characterized in that** the two sleeve parts (T, T') are congruently folded onto each other along a fold axis (50) for forming the sleeve (H).

13. Gas flow distributor according to one of the preceding claims, **characterized in that** the two layers (51, 52) are formed congruent.

14. Gas flow distributor according to one of the preceding claims, **characterized in that** the through-openings (55) are arranged in the sleeve (H) in a way, that they are covered in a state of the gas flow distributor (1) in which the latter is arranged in an airbag (40) as intended by an airbag layer (42) of the airbag (40), so that no gas can escape through said through-openings (55) out of the gas flow distributor (1) upon inflation of the airbag (40).

15. Gas flow distributor according to claim 7 or one of the claims 8 to 14 as far as referred back to claim 7, **characterized in that** at least one additional exhaust port (28) is formed at the second section (20), through which gas can flow out of the second section (20) across the extension direction (23) of the second section (20).

## Revendications

1. Répartiteur de flux gazeux (1) pour un module de coussin gonflable destiné à une répartition ciblée du gaz dégagé depuis un générateur de gaz (30) vers un coussin gonflable (40) lors du gonflage du coussin gonflable (40), comprenant une enveloppe flexible (H) du répartiteur de flux gazeux (1) qui, lors du gonflage du coussin gonflable (40), est traversée par le gaz dégagé et qui comporte au moins deux parties d'enveloppe (T, T') en matériau flexible reliées l'une à l'autre par une couture (N), ladite couture (N) encaissant des forces que le gaz traversant l'enveloppe (H) exerce sur l'enveloppe (H), dans lequel pour encaisser les forces exercées par le gaz sur l'enveloppe (H) il est prévu au moins par tronçons une liaison additionnelle détachable (V) des deux parties d'enveloppe (T, T'), et pour limiter les forces à encaisser par la couture (N), la liaison additionnelle (V) coopère avec l'enveloppe (H) de telle façon que cette liaison (V) est détachée quand le gaz traverse l'enveloppe (H),
**caractérisé en ce que**
chaque partie d'enveloppe (T, T') comporte deux couches (51, 52) d'un matériau flexible, sachant que pour positionner les couches (51, 52) lors de la fabrication du répartiteur de flux gazeux (1), les couches (51, 52) comprennent chacune une ouverture traversante (55), ces ouvertures étant exactement superposées quand les couches (51, 52) occupent les unes par rapport aux autres leur position conforme à leur destination.

2. Répartiteur de flux gazeux selon la revendication 1, **caractérisé en ce que** la liaison additionnelle (V) s'étend au moins par tronçons le long de la couture (N).

3. Répartiteur de flux gazeux selon la revendication 1 ou 2, **caractérisé en ce que** l'enveloppe (H) entoure un espace intérieur (I) du répartiteur de flux gazeux (1).

4. Répartiteur de flux gazeux selon la revendication 3, **caractérisé en ce que** la liaison additionnelle (V) des deux parties d'enveloppe (T, T') est agencée devant la couture (N), observée depuis l'espace intérieur (I) du répartiteur de flux gazeux.

5. Répartiteur de flux gazeux selon l'une quelconque des revendications précédentes, **caractérisé en ce que** l'enveloppe (H) présente un premier tronçon (10) et un deuxième tronçon (20) relié à ce dernier de manière à conduire le gaz.

6. Répartiteur de flux gazeux selon la revendication 5, **caractérisé en ce que** le premier tronçon (10) est réalisé pour recevoir le générateur de gaz (30) de telle façon que des ouvertures de sortie de gaz (31) du générateur de gaz (30) sont agencées dans une partie de l'espace intérieur (I) du répartiteur de flux gazeux (1) qui est entourée par le premier tronçon (10).

7. Répartiteur de lux gazeux selon la revendication 5 ou 6, **caractérisé en ce que** le deuxième tronçon (20) est installé et prévu pour être agencé dans un espace intérieur (41) d'un sac gonflable (40) pouvant être rempli de gaz, le deuxième tronçon (20) comportant en particulier deux ouvertures d'échappement (21, 22) mutuellement opposées, par lesquelles le gaz peut parvenir dans un sac gonflable (40), et le deuxième tronçon (20) s'étendant en particulier le long d'une direction d'extension (23).

8. Répartiteur de flux gazeux selon l'une des revendications précédentes, **caractérisé en ce que** la liaison détachable (V) est formée par une couture déchirable.

9. Répartiteur de flux gazeux selon l'une des revendications précédentes, **caractérisé en ce que** la couture (N) est réalisée sous forme de l'une des coutures suivantes :
- une couture cousue,
- une couture collée, ou
- une couture soudée.

10. Répartiteur de flux gazeux selon l'une des revendications précédentes, **caractérisé en ce que** les deux parties d'enveloppe (T, T') sont formées respectivement par au moins une couche (51, 52, 53, 53', 54) d'un matériau flexible, lesquelles sont reliées entre elles au moyen de la couture (N) le long de leurs bords extérieurs (25, 26).

11. Répartiteur de flux gazeux selon l'une des revendications précédentes, **caractérisé en ce que** les deux parties d'enveloppe (T, T') sont reliées l'une à l'autre d'un seul tenant par tronçons.

12. Répartiteur de flux gazeux selon l'une des revendications précédentes, **caractérisé en ce que** les deux parties d'enveloppe (T, T') sont pliées l'une sur l'autre se manière à coïncider pour former l'enveloppe (H) le long d'un axe de pliage (50).

13. Répartiteur de flux gazeux selon l'une des revendications précédentes, **caractérisé en ce que** les deux couches (51, 52) sont réalisées de manière à coïncider.

14. Répartiteur de flux gazeux selon l'une des revendications précédentes, **caractérisé en ce que** les ouvertures traversantes (55) sont agencées sur l'enveloppe (H) de telle façon que, dans un état du répartiteur de flux gazeux (1) agencé de manière conforme à sa destination dans un coussin gonflable (40), elles sont couvertes par une couche (42) du coussin gonflable (40) de sorte que lors du gonflage du coussin gonflable (40), le gaz peut s'échapper hors du répartiteur de flux gazeux (1) via les ouvertures traversantes (55).

15. Répartiteur de flux gazeux selon la revendication 7 ou selon l'une des revendications 8 à 14 dans la mesure où elles dépendent de la revendication 7, **caractérisé en ce qu'**au moins une ouverture d'échappement (28) additionnelle est réalisée sur le deuxième tronçon (20), par laquelle le gaz peut s'échapper hors du deuxième tronçon (20) de manière transversale par rapport à la direction d'extension (23) du deuxième tronçon (20).
